(19) Europäisches Patentamt / European Patent Office / Office européen des brevets

(11) **EP 4 702 834 A1**

(12) **EUROPEAN PATENT APPLICATION**
published in accordance with Art. 153(4) EPC

(43) Date of publication:
**04.03.2026   Bulletin 2026/10**

(21) Application number: **24796515.5**

(22) Date of filing: **13.02.2024**

(51) International Patent Classification (IPC):
***A01G 18/20*** (2018.01)

(52) Cooperative Patent Classification (CPC):
**A01G 18/20**

(86) International application number:
**PCT/JP2024/004857**

(87) International publication number:
**WO 2024/224756 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:   **28.04.2023   JP 2023074489**

(71) Applicant: **SETOLAS Holdings, Inc.
Takamatsu-shi, Kagawa 760-0026 (JP)**

(72) Inventor: **NAKAMURA, Hajime
Takamatsu-shi, Kagawa 762-0026 (JP)**

(74) Representative: **Vossius & Partner
Patentanwälte Rechtsanwälte mbB
Siebertstraße 3
81675 München (DE)**

(54) **ADDITIVE FOR MUSHROOM CULTURE MEDIUM**

(57)      An additive for a mushroom culture medium is provided. An additive for a mushroom culture medium, comprising: an antacid; and a nutrient.

EP 4 702 834 A1

**Description**

TECHNICAL FIELD

The present disclosure relates to an additive for a mushroom culture medium and a mushroom culture medium containing the additive for a mushroom culture medium.

BACKGROUND ART

In the artificial cultivation of mushrooms, fungal bed cultivation usually involves preparing a culture medium by adding a nutrient source such as rice bran, soy pulp, or wheat bran to a base material composed of sawdust, corncob meal, bagasse, beet pulp, or the like.

Patent Document 1 discloses a mushroom cultivation promoter composed of calcium dihydrogen phosphate. According to Patent Document 1, the produced mushrooms have a low rate of malformation and consistently achieve high yields.

PRIOR ART DOCUMENT

PATENT DOCUMENT

Patent Document 1: JP-A-2000-245256

SUMMARY OF THE INVENTION

PROBLEMS TO BE SOLVED BY THE INVENTION

As a result of testing the mushroom cultivation promoter described in Patent Document 1, the present inventor has found that the individual weight of mushroom fruiting bodies increases, but the overall yield decreases as compared with the case of no addition. It is an object of the present disclosure to provide a novel additive for a mushroom culture medium that increases the yield as compared to the case of no additive usage.

SOLUTIONS TO THE PROBLEMS

The present inventor has conducted intensive studies in order to solve this object. As a result, the present inventor has found that the object can be solved by combining an antacid and a nutrient. The present disclosure has been completed based on such findings, and includes the following aspects.

A first embodiment of the present disclosure provides an additive for a mushroom culture medium comprising an antacid and a nutrient.

In a second embodiment of the present disclosure, in the description of the first embodiment, the antacid may comprise one or more selected from an aluminum compound, a calcium compound, a magnesium compound, and a sodium compound.

In a third embodiment of the present disclosure, in the description of the first or second embodiment, the antacid may comprise one or more selected from aluminum hydroxide, aluminum silicate, magnesium aluminometasilicate, calcium aluminosilicate, calcium aluminosilicate glass, calcium aluminate hydrate, dawsonite, zeolite, calcium carbonate, calcium hydroxide, calcium oxide, calcium silicate, magnesium carbonate, magnesium hydroxide, magnesium oxide, magnesium silicate, sodium hydrogen carbonate, sodium alginate, hydrocalumite, and hydrotalcite.

In a fourth embodiment of the present disclosure, in any one of the descriptions of the first to third embodiments, the nutrient may comprise one or more selected from a phosphoric acid compound, a nitric acid compound, and a sulfuric acid compound.

In a fifth embodiment of the present disclosure, in any one of the descriptions of the first to fourth embodiments, the nutrient may comprise one or more selected from calcium dihydrogen phosphate, calcium monohydrogen phosphate, calcium phosphate, octacalcium phosphate, magnesium phosphate, magnesium monohydrogen phosphate, magnesium dihydrogen phosphate, aluminum phosphate, hydroxyapatite, calcium nitrate, magnesium nitrate, aluminum nitrate, calcium sulfate, magnesium sulfate, and aluminum sulfate.

In a sixth embodiment of the present disclosure, in any one of the descriptions of the first to fifth embodiments, the nutrient may comprise a phosphoric acid compound.

In a seventh embodiment of the present disclosure, in the description of the sixth embodiment, the content of phosphorus atoms may be 5 to 50 wt% in terms of oxide ($P_2O_5$) based on the total weight of the additive for a mushroom culture medium.

In an eighth embodiment of the present disclosure, in the description of the sixth or seventh embodiment, a weight ratio of the phosphoric acid compound to the antacid may be 1 : 99 - 90 : 10.

In a ninth embodiment of the present disclosure, in any one of the descriptions of the first to eighth embodiments, the combinations of the antacid and the nutrient may comprise any one of combinations selected from (i) to (iii) below:

(i) a combination of aluminum hydroxide; and calcium dihydrogen phosphate;
(ii) a combination of aluminum hydroxide and aluminum silicate; and calcium dihydrogen phosphate; and
(iii) a combination of aluminum hydroxide and magnesium silicate; and calcium dihydrogen phosphate.

In a tenth embodiment of the present disclosure, in any one of the descriptions of the first to ninth embodiments, the additive for a mushroom culture medium may be for use in a mushroom species that undergoes a flush step of generating a mushroom fruiting body and a harvest step of harvesting the mushroom fruiting body generated in the flush step, wherein each of the steps is performed a plurality of times.

In an eleventh embodiment of the present disclosure, in any one of the descriptions of the first to tenth embodiments, a mushroom species that undergoes a flush step of generating a mushroom fruiting body and a harvest step of harvesting the mushroom fruiting body generated in the flush step, wherein each of the steps is performed a plurality of times, may be one or more selected from Lentinus edodes and Agaricus bisporus.

In the eleventh embodiment of the present disclosure, in any one of the descriptions of the first to tenth embodiments, a mushroom species that undergoes a flush step of generating a mushroom fruiting body and a harvest step of harvesting the mushroom fruiting body generated in the flush step, wherein each of the steps is performed a plurality of times, may be Auricularia auricula-judae.

The twelfth embodiment of the present disclosure provides a mushroom culture medium comprising the additive for a mushroom culture medium according to any one of the descriptions of the first to eleventh embodiments.

A thirteenth embodiment of the present disclosure provides a method for culturing a mushroom, comprising:

a culturing step of culturing a fungus of a mushroom in a mushroom culture medium comprising the additive for a mushroom culture medium according to any one of the first to eleventh embodiments and the fungus of a mushroom;
a first flush step of generating a first mushroom fruiting body in the mushroom culture medium; and
a first harvest step of harvesting the first mushroom fruiting body generated in the first flush step.

In a fourteenth embodiment of the present disclosure, in the description of the thirteenth embodiment, the method may further comprise:

an $n^{th}$ rest step of resting the mushroom culture medium after an $n-1^{th}$ harvest step;
an $n^{th}$ harvest step of generating an $n^{th}$ mushroom fruiting body in the mushroom culture medium after the $n^{th}$ rest step; and
an $n^{th}$ harvest step of harvesting an $n^{th}$ mushroom fruiting body generated from the mushroom culture medium in the $n^{th}$ flush step.

In the fourteenth embodiment of the present disclosure, in the description of the thirteenth embodiment, n may be an integer of 2 or more.

In a fifteenth embodiment of the present disclosure, in the fourteenth embodiment, the method may further comprise an $n^{th}$ immersion step of immersing the mushroom culture medium in water after the $n-1^{th}$ rest step and before the $n^{th}$ flush step.

In a sixteenth embodiment of the present disclosure, in the description of the fourteenth or fifteenth embodiment, the $n-1^{th}$ rest step, the $n^{th}$ flush step, and the $n^{th}$ harvest step may be repeated twice or more according.

In a seventeenth embodiment of the present disclosure, in any one of the descriptions of the fourteenth to sixteenth embodiments, the $n-1^{th}$ rest step, the $n-1^{th}$ immersion step, the $n^{th}$ flush step, and the $n^{th}$ harvest step may be repeated twice or more.

In an eighteenth embodiment of the present disclosure, in any one of the descriptions of the fourteenth to seventeenth embodiments, the $n-1^{th}$ rest step may comprise adding a slurry comprising a new additive for a mushroom culture medium to the mushroom culture medium.

In the eighteenth embodiment of the present disclosure, in any of the descriptions of the fourteenth to seventeenth embodiments, the new additive for a mushroom culture medium may comprise an antacid and a nutrient.

In a nineteenth embodiment of the present disclosure, in any one of the descriptions of the fifteenth to eighteenth embodiments, the $n-1^{th}$ immersion step may comprise immersing a slurry comprising a new additive for a mushroom culture medium to the mushroom culture medium.

In the nineteenth embodiment of the present disclosure, in any one of the descriptions of the fifteenth to eighteenth embodiments, the new additive for a mushroom culture medium may comprise an antacid and a nutrient.

EFFECTS OF THE INVENTION

The present disclosure provides an additive for a mushroom culture medium capable of increasing the yield of mushroom fruiting bodies. In a more specific aspect, the present disclosure provides an additive for a mushroom culture medium capable of increasing the individual weight of mushroom fruiting bodies. In a further specific aspect, the present disclosure provides an additive for a mushroom culture medium capable of shortening a harvesting period.

BRIEF DESCRIPTION OF THE DRAWINGS

[Fig. 1] Fig. 1 is a graph showing the yield of Lentinus edodes in each Example and each Comparative example of Cultivation Test 1.
[Fig. 2] Fig. 2 is a graph showing the individual weight of Lentinus edodes in each Example and each Comparative example of Cultivation Test 1.
[Fig. 3] Fig. 3 is a graph showing the yield of Lentinus edodes per flush in each Example and each Comparative example of Cultivation Test 2.
[Fig. 4] Fig. 4 is a graph showing the cumulative daily yield of Agaricus bisporus in each Example and each Comparative example of Cultivation Test 3.

DETAILED DESCRIPTION

In the present specification, the individual weight means the weight of one mushroom fruiting body. For the mushroom species that produces a plurality of mushroom fruiting bodies are generated, the weight of all harvested mushroom fruiting bodies can be calculated by dividing the total weight by the number of fruiting bodies.

In the present specification, for the mushroom species that undergoes the flush and harvesting of mushroom fruiting bodies a plurality of times, the mushroom fruiting body generated in the first flush step is referred to as first flush, the mushroom fruiting body generated in the second flush step is referred to as second flush, and the mushroom fruiting body generated in the $n^{th}$ flush step is referred to as $n^{th}$ flush (n is an integer).

The present disclosure provides an additive for a mushroom culture medium comprising an antacid and a nutrient in an aspect. However, the antacid and the nutrient are different from each other.

In one embodiment, an antacid means a compound that may exhibit the action of neutralizing an acid. In the step of culturing the mushroom, an organic acid such as oxalic acid may be generated from the mushroom fungus. The antacid may promote the growth of the mushroom fruiting body by neutralizing the organic acid.

In one aspect, the antacid may be a compound in which the pH of a 10 wt% aqueous dispersion of the antacid is higher than the pH of a 10 wt% aqueous dispersion of a nutrient described later. The pH of the 10 wt% aqueous dispersion of the antacid may be, for example, 5.5 to 13.0, and specifically, 6.0 to 12.0.

In one embodiment of the present disclosure, the antacid may preferably comprise one or more selected from an aluminum compound, a calcium compound, a magnesium compound, and a sodium compound. These compounds may be natural products or synthetic products. These compounds may also be hydrates. The form of these compounds may be, for example, a gel, glass, a porous body, a powder, or particles. In a specific example, the antacid may comprise two or more, three or more, or four or more of these compounds. In a more specific example, the antacid may comprise one to five of these compounds, preferably two to five or more, for example, two.

In one embodiment, the antacid may preferably comprise one or more selected from a hydroxide, a silicate, a metasilicate, an aluminosilicate, an aluminate, a carbonate, a double or multiple hydroxide, a carbonate hydroxide, an oxide, a hydrogen carbonate, a double or multiple hydroxide, and an alginate of one or more metals selected from aluminum, calcium, magnesium, and sodium.

In one embodiment, the aluminum compound may preferably comprise one or more selected from aluminum hydroxide, aluminum silicate, magnesium aluminometasilicate, calcium aluminosilicate, calcium aluminosilicate glass, calcium aluminate hydrate, dawsonite, zeolite, hydrocalumite, and hydrotalcite. Preferably, the aluminum compound may comprise one or more selected from aluminum hydroxide and aluminum silicate. More preferably, the aluminum compound may comprise aluminum hydroxide.

In one embodiment, the calcium compound may preferably comprise one or more selected from calcium carbonate, calcium hydroxide, calcium oxide, calcium silicate, calcium aluminosilicate, calcium aluminosilicate glass, calcium aluminate hydrate, and hydrocalumite.

In one embodiment, the magnesium compound may preferably comprise one or more selected from magnesium carbonate, magnesium hydroxide, magnesium oxide, magnesium silicate, magnesium aluminometasilicate, and hydrotalcite. Preferably, the magnesium compound may comprise one or more selected from magnesium silicate and magnesium hydroxide. More preferably, the magnesium compound may comprise magnesium silicate.

In one embodiment, the sodium compound may preferably comprise one or more selected from sodium hydrogen carbonate, sodium alginate, and dawsonite.

In one embodiment, the total content of the aluminum compound, the calcium compound, the magnesium compound, and the sodium compound may be preferably 80 wt% to 100 wt%, more preferably 90 wt% to 100 wt%, and still more preferably 95 wt% to 100 wt% in 100 parts by weight of the antacid.

In one embodiment, the antacid may preferably comprise one or more selected from an aluminum compound and a magnesium compound, more preferably comprise one or more selected from an aluminosilicate, an aluminate; and a hydroxide, a silicate, a metasilicate, a carbonate, a double or multiple hydroxide, a carbonate hydroxide, an oxide, a hydrogen carbonate, a double or multiple hydroxide, and an alginate of one or more selected from aluminum and magnesium, and still more preferably comprise one or more selected from an aluminum hydroxide, an aluminum silicate, and a magnesium silicate.

In one embodiment, the content of one or more selected from the aluminum compound and the magnesium compound may be preferably 80 wt% to 100 wt%, more preferably 90 wt% to 100 wt%, and still more preferably 95 wt% to 100 wt% in 100 parts by weight of the antacid.

In one embodiment, the nutrient means a compound comprising one or more selected from a potassium atom, a phosphorus atom, a nitrogen atom, and a sulfur atom and capable of exhibiting an action of promoting the growth of the mushroom fruiting body.

In one aspect, the pH of the 10 wt% aqueous dispersion of the nutrient may be, for example, 2.0 or more and less than 5.5, and specifically, 3.0 or more and 5.0 or less.

In one embodiment, the nutrient may comprise one or more selected from a phosphoric acid compound, a nitric acid compound, and a sulfuric acid compound. These compounds may be natural products or synthetic products. These compounds may also be hydrates. The form of these compounds may be, for example, a gel, glass, a porous body, a powder, or particles. In a specific example, the nutrient may comprise two or more, three or more, or four or more of these compounds. In a more specific example, the nutrient may be one to five of these compounds. In addition, only one nutrient may be used.

In one embodiment, the phosphoric acid compound may comprise one or more selected from calcium monohydrogen phosphate, calcium dihydrogen phosphate, calcium phosphate, octacalcium phosphate, magnesium phosphate, magnesium monohydrogen phosphate, magnesium dihydrogen phosphate, aluminum phosphate, and hydroxyapatite. Preferably, the phosphoric acid compound may comprise one or more selected from calcium monohydrogen phosphate and calcium dihydrogen phosphate, more preferably calcium dihydrogen phosphate.

In one embodiment, the nitric acid compound may comprise one or more selected from calcium nitrate, magnesium nitrate, and aluminum nitrate.

In one embodiment, the sulfuric acid compound may comprise one or more selected from calcium sulfate, magnesium sulfate, and aluminum sulfate.

In one embodiment, the nutrient may preferably comprise a phosphoric acid compound, preferably a monohydrogen phosphate compound such as calcium monohydrogen phosphate and magnesium monohydrogen phosphate, as well as one or more selected from dihydrogen phosphate compounds such as calcium dihydrogen phosphate and magnesium dihydrogen phosphate, more preferably a dihydrogen phosphate compound, and still more preferably calcium dihydrogen phosphate.

In one embodiment, the content of the phosphoric acid compound may be preferably 80 wt% to 100 wt%, more preferably 90 wt% to 100 wt%, and still more preferably 95 wt% to 100 wt% in 100 parts by weight of the nutrient.

In a more specific embodiment, the combinations of antacid and the nutrient preferably comprise any one combination selected from the following (i) to (vi):

(i) a combination of aluminum hydroxide; and calcium dihydrogen phosphate;
(ii) a combination of aluminum hydroxide and aluminum silicate; and calcium dihydrogen phosphate;
(iii) a combination of aluminum hydroxide and magnesium silicate; and calcium dihydrogen phosphate;
(iv) a combination of aluminum hydroxide and calcium carbonate; and calcium dihydrogen phosphate;
(v) a combination of aluminum hydroxide, aluminum silicate and calcium carbonate; and calcium dihydrogen phosphate; and
(vi) a combination of aluminum hydroxide, aluminum silicate, magnesium hydroxide and calcium carbonate; and calcium dihydrogen phosphate.

In a further specific embodiment, the combinations of antacid and the nutrient preferably comprise any one combination selected from the following (i) to (iii):

(i) a combination of aluminum hydroxide; and calcium dihydrogen phosphate;
(ii) a combination of aluminum hydroxide and aluminum silicate; and calcium dihydrogen phosphate; and
(iii) a combination of aluminum hydroxide and magnesium silicate; and calcium dihydrogen phosphate.

In one embodiment, the content of aluminum atoms in the additive for a mushroom culture medium is 10 to 50 wt%, preferably 15 to 45 wt%, and more preferably 20 to 40 wt% in terms of oxide ($Al_2O_3$) based on the total weight of the additive for a mushroom culture medium. The proportion may be 10 wt% or more, for example, 15 wt% or more, 20 wt% or more, 25 wt% or more, or 30 wt% or more. The proportion may be 50 wt% or less, for example, 45 wt% or less, 40 wt% or less, or 35 wt% or less.

In the present disclosure, the content of a specific atom in terms of oxide based on the total weight of the additive for a mushroom culture medium means a value obtained by dividing the weight-based content of a compound comprising the specific atoms by the molecular weight of the compound comprising the specific atom and further multiplying the value by the molecular weight of an oxide of the specific atom when the total weight of the additive for a mushroom culture medium is 100 wt%. When the specific atom is a silicon atom, the silicon compound corresponds to a compound comprising the specific atom, and $SiO_2$ corresponds to an oxide. Similarly, when the specific atom is a calcium atom, the calcium compound corresponds to a compound comprising the specific atom, and CaO corresponds to an oxide. When the specific atom is a magnesium atom, the magnesium compound corresponds to a compound comprising the specific atom, and MgO corresponds to an oxide. When the specific atom is a phosphorus atom, the phosphoric acid compound corresponds to a compound comprising the specific atom, and $P_2O_5$ corresponds to an oxide.

In one embodiment, the content of silicon atoms in the additive for a mushroom culture medium is 0 to 40 wt%, preferably 1 to 35 wt%, and more preferably 5 to 30 wt% in terms of oxide ($SiO_2$) based on the total weight of the additive for a mushroom culture medium. The proportion may be 1 wt% or more, for example, 5 wt% or more, 10 wt% or more, 15 wt% or more, or 20 wt% or more. The proportion may be 40 wt% or less, for example, 35 wt% or less, 30 wt% or less, 20 wt% or less, or 25 wt% or less.

In one embodiment, the content of calcium atoms in the additive for a mushroom culture medium is 2 to 40 wt%, preferably 5 to 35 wt%, and more preferably 10 to 30 wt% in terms of oxide (CaO) based on the total weight of the additive for a mushroom culture medium. The proportion may be 2 wt% or more, for example, 5 wt% or more, 10 wt% or more, or 15 wt% or more. The proportion may be 40 wt% or less, for example, 35 wt% or less, 30 wt% or less, or 25 wt% or less.

In one embodiment, the content of magnesium atoms in the additive for a mushroom culture medium is 0 to 20 wt%, preferably 1 to 18 wt%, and more preferably 2 to 16 wt% in terms of oxide (MgO) based on the total weight of the additive for a mushroom culture medium. The proportion may be 1 wt% or more, for example, 2 wt% or more, 4 wt% or more, or 5 wt% or more. The proportion may be 20 wt% or less, for example, 18 wt% or less, 16 wt% or less, or 14 wt% or less.

In one embodiment, the content of phosphorus atoms in the additive for a mushroom culture medium is 5 to 50 wt%, preferably 10 to 45 wt%, and more preferably 15 to 40 wt% in terms of oxide ($P_2O_5$) based on the total weight of the additive for a mushroom culture medium. The proportion may be 5 wt% or more, for example, 10 wt% or more, 15 wt% or more, 20 wt% or more, or 25 wt% or more. The proportion may be 50 wt% or less, for example, 45 wt% or less, 40 wt% or less, or 35 wt% or less.

In one embodiment, the weight ratio of the nutrient to the antacid (nutrient : antacid) in the additive for a mushroom culture medium may be 1 : 99 - 90 : 10, for example, 5 : 95 - 85 : 15, 10 : 90 - 80 : 20, or 15 : 85 - 75 : 25.

In one embodiment, the weight ratio of the phosphoric acid compound to the antacid (phosphoric acid compound : antacid) in the additive for a mushroom culture medium may be 1 : 99 - 90 : 10, for example, 5 : 95 - 85 : 15, 10 : 90 - 80 : 20, or 15 : 85 - 75 : 25.

In one embodiment, the total weight of the nutrient and the antacid in the additive for a mushroom culture medium is preferably 90 parts by weight to 100 parts by weight, more preferably 95 parts by weight to 100 parts by weight, and still more preferably 99 parts by weight to 100 parts by weight, based on a total of 100 parts by weight of the additive for a mushroom culture medium.

The form of the additive for a mushroom culture medium of the present aspect is not particularly limited, and may be a powder, a particle, a granule, or a pellet. Alternatively, it may be suspended in a liquid to form a slurry.

The additive for a mushroom culture medium of the present aspect can be used for culturing various mushroom species. In one embodiment, the additive for a mushroom culture medium of the present aspect can be used for culturing Lentinus edodes, Agaricus bisporus, Flammulina velutipes, Hypsizygus marmoreus, Pholiota microspora, Grifola frondosa, Pleurotus eryngii, Hericium erinaceus, Pleurotus ostreatus, or Auricularia auricula-judaes, although not limited thereto. Preferably, the additive for a mushroom culture medium of the present aspect can be used for culturing Lentinus edodes, Agaricus bisporus, Flammulina velutipes, Hypsizygus marmoreus, Pholiota microspora, Grifola frondosa, Pleurotus eryngii, Hericium erinaceus, or Pleurotus ostreatus, although not limited thereto.

In a specific embodiment, the additive for a mushroom culture medium of the present aspect may be suitably used for a mushroom species that undergoes a flush step of generating a mushroom fruiting body and a harvest step of harvesting the mushroom fruiting body generated in the flush step, each of the steps being performed a plurality of times. The number of repetitions of the flush step and the harvest step may be, for example, 2 to 10 times. In a more specific embodiment, the additive for a mushroom culture medium of the present aspect can be suitably used for Lentinus edodes, Agaricus bisporus, or Auricularia auricula-judaes, and can be more suitably used for Lentinus edodes or Agaricus bisporus.

In the more specific embodiment, the mushroom species that undergoes the flush step of generating the mushroom fruiting body and the harvest step of harvesting the mushroom fruiting body generated in the flush step may comprise Auricularia auricula-judaes, each of the steps being performed a plurality of times.

The amount of the additive for a mushroom culture medium of the present aspect to be added to the culture medium is not particularly limited, and can be appropriately adjusted according to the mushroom species cultured by those skilled in the art and the culture environment. In a specific embodiment, the amount of the additive for a mushroom culture medium of the present aspect to be added to the culture medium is 0.1 to 1.2 wt%, preferably 0.2 to 1.0 wt%, and more preferably 0.2 to 0.6 wt%, based on the total weight of the mushroom culture medium. The addition amount may be, for example, 0.1 wt% or more, 0.2 wt% or more, 0.3 wt% or more, or 0.4 wt% or more. The addition amount may be, for example, 1.2 wt% or less, 1.0 wt% or less, 0.8 wt% or less, or 0.6 wt% or less.

An addition of the additive for a mushroom culture medium of the present aspect increases the yield of the mushroom fruiting body as compared with the case of no addition. In a specific example, the addition of the additive for a mushroom culture medium of the present aspect increases the yield of the mushroom fruiting body by 5% or more, for example, 10% or more, or 15% or more, for example, 5 to 150%, 10 to 100%, 20 to 50%, compared to the case of no additive usage. In one embodiment, when the flush and the harvesting are repeated twice or more, an increase in the yield of the mushroom fruiting body may be achieved at each $n$th flush. In a more specific embodiment, the increase in the yield may be achieved at each of first to third flushes or 1 and 2 flushes. In a further specific embodiment, comparing the sole yield of the fourth flush, the addition of the additive for a mushroom culture medium of the present aspect reduces the yield or increase it by less than 5% compared to the case of no additive usage. In other embodiment, the cumulative yield of, for example, first to tenth flushes, first to fifth flushes, first to fourth flushes, first to third flushes, or first and second flushes may achieve the increase in the yield.

In one embodiment, the addition of the additive for a mushroom culture medium of the present aspect achieves a cumulative yield up to the third flush, preferably up to the second flush, instead of the cumulative yield obtained up to the fourth flush when the additive is not added. In other words, the addition of the additive for a mushroom culture medium of the present aspect shortens the period until harvest of the mushroom fruiting body. Note that, although the total yield increases when the number of flushes is large, a malformation may occur, and it is basically preferable to obtain a high yield with a small number of flushes.

In an aspect, the present disclosure provides a mushroom culture medium comprising the additive for a mushroom culture medium of the present disclosure. Raw materials and formulation of the mushroom culture medium may be appropriately selected according to the mushroom species to be cultured by those skilled in the art and culture conditions. Specifically, the mushroom culture medium may comprise base materials such as sawdust, corncob meal, and cotton hull, and nutrient sources such as rice bran, wheat bran, and soy pulp. All the matters described in the aspect of the additive for a mushroom culture medium can be applied to the present aspect.

In an aspect, the present disclosure provides a method for culturing a mushroom using a mushroom culture medium comprising the additive for a mushroom culture medium of the present disclosure. All the matters described in the aspect of the additive for a mushroom culture medium and the mushroom culture medium can be applied to the present aspect.

The method of the present aspect may comprise:

a culturing step of culturing a fungus of a mushroom in a mushroom culture medium comprising the additive for a mushroom culture medium of the present disclosure and the fungus of a mushroom;
a first flush step of generating a first mushroom fruiting body in the mushroom culture medium; and
a first harvest step of harvesting the generated first mushroom fruiting body generated in the first flush step.

In one embodiment, the method for culturing a mushroom of the present aspect may further comprise:

an $n$th rest step of resting the mushroom culture medium after an $n-1$th harvest step;
an $n$th flush step of generating an $n$th mushroom fruiting body in the mushroom culture medium after the second rest step; and
an $n$th harvest step of harvesting an $n$th mushroom fruiting body generated from the culture medium in the $n$th flush step, wherein $n$ may be an integer of 2 or more.

In one embodiment, the method of the present aspect may repeat the rest step, followed by the flush step and the harvest step twice or more, for example, three or more times, four or more times, five or more times, such as 2 to 10 times, 2 to 5 times, 2 to 4 times, and 2 or 3 times. Repeating the rest step, the flush step, and the harvest step twice or more corresponds to a case where the rest step, the flush step, and the harvest step are repeated until n becomes 3 or more. That is, n may be, for example, 3 or more, 4 or more, or 5 or more, and may be, for example, 3 to 11, 3 to 6, 3 to 5, or 3 or 4.

In one embodiment, the method for culturing a mushroom in one aspect may comprise an $n-1^{th}$ immersion step of immersing the mushroom culture medium in water after the $n-1^{th}$ rest step and before the $n^{th}$ flush step. The $n-1^{th}$ immersion step may be preferably applied to a method for culturing Lentinus edodes. In another aspect, the method for culturing a mushroom of the present aspect may not comprise the $n-1^{th}$ immersion step. For example, the method for culturing Agaricus bisporus may not comprise the $n-1^{th}$ immersion step.

In such an embodiment, the method of the present aspect may repeat the rest step, followed by the immersion step, the flush step and the harvest step twice or more, for example, three or more times, four or more times, five or more times, such as 2 to 10 times, 2 to 5 times, 2 to 4 times, and 2 or 3 times. Repeating the rest step, the immersion step, the flush step, and the harvest step twice or more corresponds to a case where the rest step, the immersion step, the flush step, and the harvest step are repeated until n becomes 3 or more. That is, n may be, for example, 3 or more, 4 or more, or 5 or more, and may be, for example, 3 to 11, 3 to 6, 3 to 5, or 3 or 4.

In the culturing step, the fungus of the mushroom is cultured in the mushroom culture medium comprising the mushroom culture medium of the present disclosure and the fungus of the mushroom. Typically, the mushroom culture medium may be cultured in a culture vessel. The culture vessel may be in the form of a bag, a bottle, or the like as long as it can accommodate the mushroom culture medium. The weight of the mushroom culture medium accommodated in the culture vessel may be, for example, 100 to 5,000 g or 300 to 3,000 g.

The culture temperature in culturing the mushroom culture medium may be preferably 10°C to 30°C, and more preferably 15°C to 25°C. The culture humidity in culturing the mushroom culture medium may be preferably 50% to 90%, and more preferably 60% to 85% as a relative humidity. The culture time for culturing the mushroom culture medium is preferably 5 days to 200 days, and more preferably 5 days to 150 days. In one aspect, the culture time for culturing the mushroom culture medium may be more preferably 10 days to 200 days, and still more preferably 30 days to 150 days. In another embodiment, the culture time for culturing the mushroom culture medium may be more preferably 5 days to 50 days, and still more preferably 5 days to 20 days.

When the mushroom culture medium is cultured, visible light may or may not be irradiated, and visible light may be irradiated after visible light is blocked for a certain period of time. In the present disclosure, visible light irradiation can be performed by white LED irradiation. The photon flux density of such a white LED may be preferably $1 \ \mu mol \cdot m^{-2}s^{-2}$ to $10 \ \mu mol \cdot m^{-2}s^{-2}$, and more preferably $2 \ \mu mol \cdot m^{-2}s^{-2}$ to $7 \ \mu mol \cdot m^{-2}s^{-2}$.

The method for preparing a mushroom culture medium is not particularly limited, and in one aspect, the method may be performed by mixing the raw materials of the mushroom culture medium and the additive for the mushroom culture medium, and then inoculating the fungus of the mushroom. In another aspect, the mushroom culture medium may be prepared by mixing a source comprising the fungus of the mushroom at the time of the mushroom culture medium raw material with the additive for a mushroom culture medium.

In the first flush step, a first mushroom fruiting body is generated in the mushroom culture medium. In the first flush step, the mushroom culture medium can be removed from the culture vessel used as necessary and washed with water. The first mushroom fruiting body can then typically be generated by storage under irradiation with visible light. The flush temperature in generating such first mushroom fruiting body may be preferably 5°C to 25°C, and more preferably 10°C to 20°C. In addition, the relative humidity in generating the first mushroom fruiting body may be preferably 80% to 99%, and more preferably 85% to 99%.

In the first harvest step, the first mushroom fruiting body generated in the first flush step is harvested. The total time of the first flush step and the first harvest step may be, for example, 5 hours to 40 days, and specifically, 5 hours to 30 days. In one embodiment, the total time of the first flush step and the first harvest step may be, for example, 5 days to 40 days, and specifically, 10 days to 30 days. In another embodiment, the total time of the first flush step and the first harvest step may be, for example, 5 hours to 5 days, and specifically, 10 hours to 3 days.

In the $n-1^{th}$ rest step, the mushroom culture medium is rested. In one aspect, such rest may be performed by repeating irradiation of visible light and blocking of visible light. In such an aspect, the irradiation time of visible light per cycle may be, for example, 5 hours to 20 hours, and specifically, 10 hours to 15 hours. In the same embodiment, the blocking time of visible light per cycle may be, for example, 5 hours to 20 hours, and specifically, 10 hours to 15 hours. The irradiation time of visible light per cycle and the blocking time of visible light per cycle may be the same or different. The number of repetitions of irradiation with visible light and blocking of visible light may be, for example, 1 to 10, and specifically, 3 to 5. In another aspect, the rest may be performed by continuing one selected from irradiation of visible light and blocking of visible light.

The resting temperature at which the mushroom culture medium is rested can be preferably 10°C to 30°C, and more preferably 15°C to 25°C. The resting humidity when the mushroom culture medium is rested can be preferably 70% to 99%, and more preferably 80% to 95% as a relative humidity. The resting time for resting the mushroom culture medium is rested can be preferably 5 hours to 30 days, and more preferably 10 hours to 20 days as a whole. In one embodiment, the resting time for resting the mushroom culture medium can be preferably 5 days to 30 days, and more preferably 10 days to 20 days. In another aspect, the resting time for resting the mushroom culture medium can be preferably 5 hours to 5 days, and more preferably 10 hours to 3 days.

In the n-1th rest step, a slurry comprising a new additive for a mushroom culture medium may be added. As a result, it is possible to supplement insufficient nutrients, thereby obtaining a further increase in yield effect. Such a slurry may be added at any stage of the n-1th rest step, typically at the beginning of the n-1th rest step.

In the n-1th rest step, water spraying may be performed. As a result, it is possible to prevent drying of the mushroom culture medium.

The new additive for a mushroom culture medium comprises an antacid and a nutrient. Such an antacid has the same meaning as described above, and such a nutrient has the same meaning as described above. The new additive for a mushroom culture medium may be the same as or different from the additive for a mushroom culture medium used in the culturing step. Furthermore, new additives for the mushroom culture medium to be added in a plurality of rest steps may be the same as or different from each other.

In the slurry to be added in the n-1th rest step, the content of the new additive for a mushroom culture medium may be, for example, 1 wt% to 50 wt%, and specifically 10 wt% to 40 wt% in 100 parts by mass of the total of the slurry. The slurry can typically be prepared by dispersing the new additive for a mushroom culture medium in a liquid. As such a liquid, water may be used.

In the n-1th immersion step, the mushroom culture medium is immersed in water after the n-1th rest step and before the nth flush step described later. Such immersion can typically be performed by immersing the mushroom culture medium in water. The temperature of water during immersion may be preferably 5°C to 25°C, and more preferably 10°C to 20°C. The time for immersion can be preferably 1 hour to 24 hours, and more preferably 3 hours to 10 hours.

The n-1th immersion step may comprise immersing a slurry comprising a new additive for a mushroom culture medium to the mushroom culture medium. As a result, it is possible to supplement insufficient nutrients, thereby obtaining a further increase in yield effect. Such a new additive for a mushroom culture medium comprises an antacid and a nutrient. Such an antacid has the same meaning as described above, and such a nutrient has the same meaning as described above. The additive for a culture medium used in the n-1th immersion step may be the same as or different from the additive for a mushroom culture medium used in the culturing step. In addition, the new additives for a mushroom culture medium used in the plurality of immersion steps may be the same as or different from each other. Furthermore, the new additive for a mushroom culture medium used in the rest step and the new additive for a mushroom culture medium used in the immersion step may be the same as or different from each other.

In the slurry to be added in the n-1th immersion step, the content of the new additive for a mushroom culture medium may be, for example, 1 wt% to 50 wt%, and specifically, 10 wt% to 40 wt%, in 100 parts by mass of the total of the slurry. The slurry can typically be prepared by dispersing the new additive for a mushroom culture medium in a liquid. As such a liquid, water may be used.

In the nth flush step, an nth mushroom fruiting body is generated in the mushroom culture medium after the n-1th rest step. Typically, the nth mushroom fruiting body can be generated by storing the mushroom culture medium under irradiation with visible light. The flush temperature in generating the nth mushroom fruiting body may be preferably 5°C to 25°C, and more preferably 10°C to 20°C. In addition, the relative humidity in generating the nth mushroom fruiting body may be preferably 80% to 99%, and more preferably 85% to 99%.

In the nth harvest step, the nth mushroom fruiting body generated in the nth flush step is harvested. The total time of the nth flush step and the nth harvest step may be, for example, 5 days to 40 days, and specifically, 10 days to 30 days.

EXAMPLES

The present invention will be described in more detail with reference to Examples below, and the present disclosure is not limited thereto.

Test Example 1: Cultivation Test 1

For Lentinus edodes, cultivation tests were conducted as follows.

Example 1

As additives for the mushroom culture medium, 34 wt% of aluminum hydroxide and 66 wt% of calcium dihydrogen phosphate, that is, 19 wt% of $Al_2O_3$, 37 wt% of $P_2O_5$, and 15 wt% of $CaO$ were used in terms of oxide. The culture medium used and the steps up to harvest are as follows.

<Preparation of Culture Medium>

By dry weight, 365 g of hardwood chips, 365 g of hardwood sage, 110 g of rice bran, and 110 g of wheat bran were mixed, and water was added thereto to prepare a culture medium so that the water content was 62%.

<Step of Culturing Mushroom Fungus (Culturing Step)>

The additive for a mushroom culture medium was blended in an amount of 0.6 wt% based on the total amount of the culture medium and sufficiently mixed, and about 2500 g of the mixture was filled in a polypropylene culture bag for a fungal bed (Sunmashback 40W47, manufactured by Santomi Sangyo Corporation). Thereafter, the resultant product was sterilized with high-pressure steam at 118°C for 90 minutes, and then cooled to normal temperature in a clean room, and 20 mL of Lentinus edodes (Hokken No. 607, manufactured by Hokken Co. Ltd.) was inoculated. The culture bag after completion of inoculation was cultured for 90 days in a dark environment at a temperature of $22 \pm 1$°C and a relative humidity of 65%. Thereafter, aging culture was performed in an environment of continuous illumination with a white LED (photon flux density: 5.54 $\mu$mol m$^{-2}$s$^{-1}$) for 30 days.

<First Flush Step>

On day 120 after inoculation, the culture bag was removed, the fungal bed surface was washed with tap water, and mushroom fruiting body formation was promoted in an environment of temperature of $15 \pm 1$°C, a relative humidity of 95%, and continuous illumination with a white LED (photon flux density: 5.54 $\mu$mol·m$^{-2}$·s$^{-1}$).

<First Harvest Step>

When the inner coat of the umbrella fungus was broken, the mushroom fruiting body was harvested, and the individual weight and the yield per fungal bed were immediately measured. The total period of the first flush step and the first harvest step was 20 days.

<First Rest Step>

After the completion of the first harvest step, culturing was performed for 14 days under illumination for 12 hours using a white LED (photon flux density 5.54 $\mu$mol·m$^{-2}$·s$^{-1}$) and in a dark environment for 12 hours at a room temperature of 18°C or higher and a relative humidity of 90% as a rest period.

<First Immersion Step>

After completion of the first rest step, the cells were immersed in tap water at 15°C or lower for 12 hours.

<Second Flush Step>

As in the first flush step, mushroom fruiting body formation was promoted.

<Second Harvest Step>

When the inner coat of the umbrella fungus was broken, the mushroom fruiting body was harvested, and the individual weight and the yield per fungal bed were immediately measured. The total period of the second flush step and the second harvest step was 15 days.

<Second Rest Step>

An experiment was performed in the same manner as in the first rest step except that the period was set to 10 days.

<Second Immersion Step>

An experiment was performed in the same manner as in the first immersion step except that the immersion time was set to 24 hours.

<Third Flush Step, Third Harvest Step, Third Rest Step, Third Immersion Step, Fourth Flush Step, and Fourth Harvest Step>

The third flush step, third harvest step, third rest step, third hydrophilic step, fourth flush step, and fourth harvest step were performed in this order. The third flush step and the fourth flush step were performed in the same manner as the second flush step, the third harvest step and the fourth harvest step were performed in the same manner as the second harvest step, the third rest step was performed in the same manner as the second rest step, and the third immersion step was performed in the same manner as the second immersion step.

Example 2

An experiment was performed in the same manner as in Example 1, except that 33 wt% of aluminum hydroxide, 62 wt% of calcium dihydrogen phosphate, and 5 wt% of aluminum silicate, that is, 19 wt% of $Al_2O_3$, 35 wt% of $P_2O_5$, 14 wt% of CaO, and 3 wt% of $SiO_2$ were used in terms of oxide as additives for the mushroom culture medium.

Comparative example 1

An experiment was performed in the same manner as in Example 1, except that the additive for a mushroom culture medium was not added.

Comparative example 2

An experiment was performed in the same manner as in Example 1, except that 100 wt% of calcium dihydrogen phosphate, that is, 57 wt% of $P_2O_5$ and 22 wt% of CaO in terms of oxide were added in an amount of 0.4 wt% based on the total amount of the culture medium, in place of the additive for the mushroom culture medium.

Comparative example 3

An experiment was performed in the same manner as in Example 1, except that 100 wt% of aluminum hydroxide, that is, 55 wt% of $Al_2O_3$ in terms of oxide was added in an amount of 0.2 wt% based on the total amount of the culture medium, in place of the additive for the mushroom culture medium.

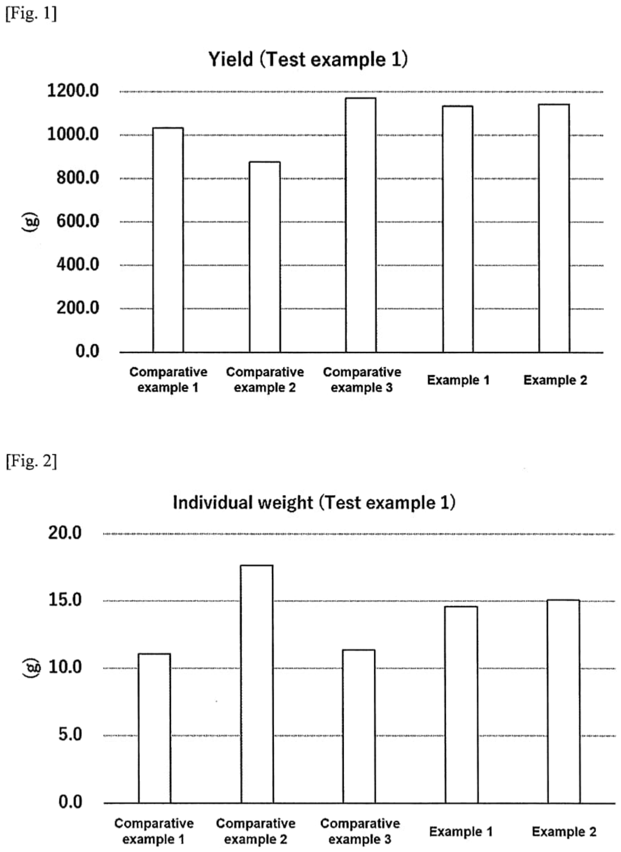

The results of Examples 1 and 2 and Comparative examples 1 to 3 are shown in Table 1 and Figs. 1 and 2.

[Table 1]

| | | | Comparative example 1 | Comparative example 2 | Comparative example 3 | Example 1 | Example 2 |
|---|---|---|---|---|---|---|---|
| Antacid | Aluminum hydroxide | wt% | - | | 100 | 34 | 33 |
| | Aluminum silicate | wt% | - | | | | 5 |
| Nutrient | Calcium dihydrogen phosphate | wt% | - | 100 | | 66 | 62 |
| Additive blending ratio | | wt% | - | 0.4 | 0.2 | 0.6 | 0.6 |
| Yield | | g | 1033.2 | 876.8 | 1171.3 | 1135.0 | 1142.3 |
| Standard error | | g | 43.5 | 37.4 | 26.1 | 24.0 | 38.5 |
| Yield rate* | | % | 100.0 | 84.9 | 113.4 | 109.9 | 110.6 |
| Individual weight | | g | 11.1 | 17.7 | 11.4 | 14.6 | 15.1 |
| Standard error | | g | 0.6 | 0.9 | 0.6 | 0.8 | 0.7 |
| * Yield rate = (yield of each Example or each Comparative example/yield of Comparative example 1) $\times$ 100 (%) | | | | | | | |

As shown in Table 1 and Figs. 1 and 2, when using only calcium dihydrogen phosphate (Comparative example 2), the individual weight of the mushroom fruiting bodies increased, but the yield per fungal bed decreased, compared to the case of no additive usage (Comparative example 1). When using only aluminum hydroxide (Comparative example 3), the yield per fungal bed increased compared to the case of no additive usage (Comparative example 1), but the individual weight of mushroom fruiting bodies was about the same. When using calcium dihydrogen phosphate and aluminum hydroxide (Example 1) and when using calcium dihydrogen phosphate, aluminum hydroxide, and aluminum silicate (Example 2), an increase in both the yield per fungal bed and the individual weight was confirmed compared to the case of no additive usage (Comparative example 1).

The reason the individual weight of mushroom fruiting bodies increased in Comparative example 2 compared to Comparative example 1 is considered that calcium dihydrogen phosphate functioned as a nutrient component. The reason the yield of the mushroom fruiting body in Comparative example 2 was lower than that in Comparative example 1 is considered that the pH of the mushroom culture medium was out of the pH range suitable for the growth of the mushroom fruiting body when the phosphoric acid compound comprising calcium dihydrogen phosphate was added alone, because the phosphoric acid compound was a weakly acidic substance.

In addition, although the yield of the mushroom fruiting body increased in Comparative example 3 compared to Comparative example 1, the reason the individual weight of the mushroom fruiting body was about the same is considered that many buds were generated as the pH of the mushroom culture medium was maintained within a pH range suitable for the growth of the mushroom fruiting body, but sufficient nutrition to grow each bud was not present in the mushroom culture medium.

Test Example 2: Cultivation Test 2

A cultivation test was performed using another Lentinus edodes variety (Mori XR1, manufactured by Mori & Company, Limited.) to measure the yield for each flush.

Example 3

As the additive for a mushroom culture medium, an additive for a mushroom culture medium comprising 50 wt% of aluminum hydroxide and 50 wt% of calcium dihydrogen phosphate, that is, 27 wt% of $Al_2O_3$, 28 wt% of $P_2O_5$, and 11 wt% of CaO in terms of oxide was blended in an amount of 0.4 wt% based on the total amount of the culture medium.

A cultivation test was performed in the same manner as in Example 1, except that the additive for a mushroom culture medium was used to remove the culture bag on Day 100, and the yield was measured after each harvest step.

Example 4

An experiment was performed in the same manner as in Example 3, except that as the additive for a mushroom culture medium, an additive for a mushroom culture medium comprising 75 wt% of aluminum hydroxide and 25 wt% of calcium dihydrogen phosphate, that is, 41 wt% of $Al_2O_3$, 14 wt% of $P_2O_5$, and 6 wt% of CaO in terms of oxide was used.

Example 5

An experiment was performed in the same manner as in Example 3, except that as the additive for a mushroom culture medium, an additive for a mushroom culture medium comprising 50 wt% of aluminum hydroxide, 25 wt% of calcium dihydrogen phosphate, and 25 wt% of aluminum silicate, that is, 30 wt% of $Al_2O_3$, 14 wt% of $P_2O_5$, 6 wt% of CaO, and 16 wt% of $SiO_2$ in terms of oxide was used.

Example 6

An experiment was performed in the same manner as in Example 3, except that as the additive for a mushroom culture medium, an additive for a mushroom culture medium comprising 25 wt% of aluminum hydroxide, 50 wt% of calcium dihydrogen phosphate, and 25 wt% of aluminum silicate, that is, 16 wt% of $Al_2O_3$, 28 wt% of $P_2O_3$, 11 wt% of CaO, and 16 wt% of $SiO_2$ in terms of oxide was used.

Example 7

An experiment was performed in the same manner as in Example 3, except that as the additive for a mushroom culture medium, an additive for a mushroom culture medium comprising 25 wt% of aluminum hydroxide, 25 wt% of calcium dihydrogen phosphate, and 50 wt% of aluminum silicate, that is, 19 wt% of $Al_2O_3$, 14 wt% of $P_2O_5$, 6 wt% of CaO, and 32 wt% of $SiO_2$ in terms of oxide was used.

Comparative example 4

An experiment was performed in the same manner as in Example 3, except that the additive for a mushroom culture medium was not added.

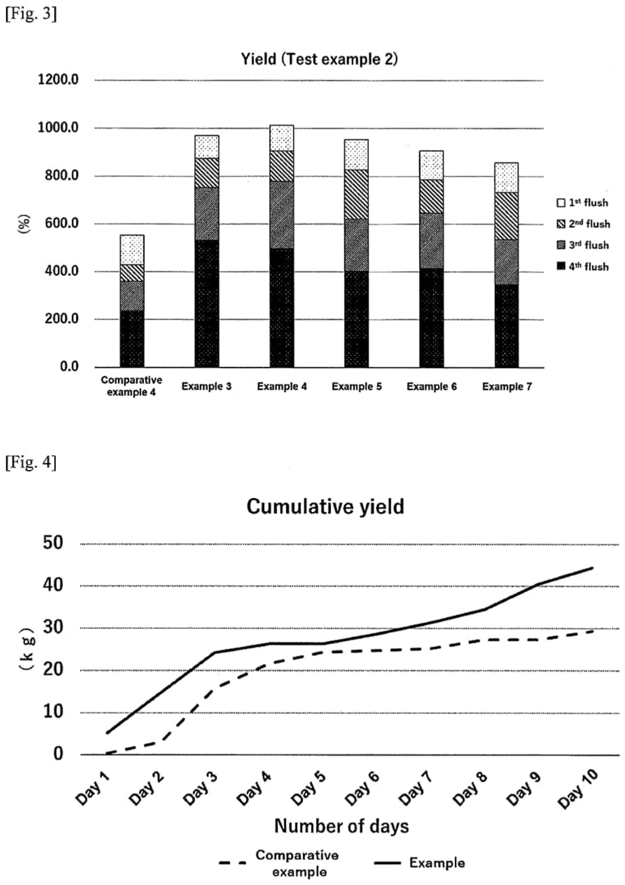

The results of Examples 3 to 7 and Comparative example 4 are shown in Table 2 and Fig. 3.

[Table 2]

| | | | Comparative example 4 | Example 3 | Example 4 | Example 5 | Example 6 | Example 7 |
|---|---|---|---|---|---|---|---|---|
| Antacid | Aluminum hydroxide | wt% | - | 50 | 75 | 50 | 25 | 25 |
| | Aluminum silicate | wt% | - | | | 25 | 25 | 50 |
| Nutrient | Calcium dihydrogen phosphate | wt% | - | 50 | 25 | 25 | 50 | 25 |
| Additive blending ratio | | wt% | - | 0.4 | 0.4 | 0.4 | 0.4 | 0.4 |
| Yield | First flush | g | 237.2 | 533.4 | 498.0 | 402.8 | 414.6 | 348.0 |
| | Second flush | g | 124.0 | 219.2 | 280.2 | 218.8 | 232.2 | 187.2 |
| | Third flush | g | 68.6 | 122.0 | 128.0 | 205.0 | 140.0 | 198.8 |
| | Fourth flush | g | 123.6 | 95.2 | 107.4 | 127.6 | 120.0 | 123.8 |
| | Total | g | 533.4 | 969.8 | 1013.6 | 954.2 | 906.8 | 857.8 |
| Standard error | | g | 214.0 | 126.4 | 89.2 | 61.3 | 74.1 | 41.6 |
| Yield rate | Total | % | 100.0 | 175.2 | 183.2 | 172.4 | 163.9 | 155.0 |
| * Yield rate = (total yield of each Example or each Comparative example/total yield of Comparative example 4) × 100 (%) | | | | | | | | |

As shown in Table 2 and Fig. 3, when using calcium dihydrogen phosphate and aluminum hydroxide (Examples 3 and 4) and when using calcium dihydrogen phosphate, aluminum hydroxide, and aluminum silicate (Examples 5, 6, and 7), an increase in yield during early fruiting stage was confirmed compared to the case of no additive usage (Comparative example 4). Specifically, in Examples 3 to 7, at the time of second flush, the yield was equal to or more than the yield obtained until the fourth flush in Comparative example 4, without additive. In addition, when using no additive (Comparative example 4), the yield decreased in the third flush, whereas in Examples 3 to 7, such a decrease was not observed. The number of flushes increases the total yield while it also increases the probability of generating malformations. Thus, Examples 3 to 7 confirmed that the use of the additive for a mushroom culture medium of the present disclosure not only increases the yield but also shortens a cultivation period and reduces the flush of malformations.

Test Example 3: Cultivation Test 3

For Agaricus bisporus, cultivation tests were conducted as follows.

Example 8

As the additive for a mushroom culture medium, 19 wt% of aluminum hydroxide, 62 wt% of calcium dihydrogen phosphate, and 19 wt% of magnesium silicate, that is, 10 wt% of $Al_2O_3$, 35 wt% of $P_2O_5$, 14 wt% of CaO, 12 wt% of $SiO_2$, and 3 wt% of MgO in terms of oxide were blended in an amount of 0.2 wt% based on the total amount of the culture medium. The culture medium used and the steps up to harvest are as follows.

<Culture Medium>

A commercially available Dutch culture medium inoculated with the fungus of Agaricus bisporus was used.

<Soil Covering Operation>

Into a container, a culture medium of Agaricus bisporus was put so as to be about 180 kg, and peat moss was covered so as to have a thickness of about 3 cm.

<Culturing Step>

Water spraying was performed at 2 L/m² for 7 days while taking care not to dry the covering soil on the culture medium on which the soil covering had been completed. The temperature was 20 to 25°C, and the relative humidity was 80 to 85%.

<First Flush Step, First Harvest Step, First Rest Step, Second Flush Step, and Second Harvest Step>

Thereafter, soil covering stirring was performed, and the first flush step, the first harvest step, the first rest step, the second flush step, and the second harvest step were performed at a temperature of 15 to 20°C and a relative humidity of 80 to 85% for 10 days while paying attention so that the soil covering surface was not dried to measure the cumulative yield from the first flush to the second flush.

Comparative example 5

An experiment was performed in the same manner as in Example 8, except that the additive for a mushroom culture medium was not added.

The results of Example 8 and Comparative example 5 are shown in Table 3 and Fig. 4. In the calculation of the yield rate, the total yield of each Example or each Comparative example means the cumulative yield up to day 10 of each Example or each Comparative example.

[Table 3]

| | | | Comparative example 5 | Example 8 |
|---|---|---|---|---|
| Antacid | Aluminum hydroxide | wt% | - | 19 |
| | Magnesium silicate | wt% | - | 19 |
| Nutrient | Calcium dihydrogen phosphate | wt% | - | 62 |
| Additive blending ratio | | wt% | - | 0.2 |
| Yield | Yield on Day 1 | kg | 0.4 | 5.2 |
| | Cumulative yield up to Day 2 | kg | 3.1 | 14.7 |
| | Cumulative yield up to Day 3 | kg | 15.7 | 24.2 |
| | Cumulative yield up to Day 4 | kg | 21.7 | 26.3 |
| | Cumulative yield up to Day 5 | kg | 24.3 | 26.3 |
| | Cumulative yield up to Day 6 | kg | 24.8 | 28.7 |
| | Cumulative yield up to Day 7 | kg | 25.2 | 31.4 |
| | Cumulative yield up to Day 8 | kg | 27.3 | 34.5 |
| | Cumulative yield up to Day 9 | kg | 27.3 | 40.5 |
| | Cumulative yield up to Day 10 | kg | 29.3 | 44.4 |
| Yield rate | Total | % | 100.0 | 151.5 |

* Yield rate = (overall yield of each Example or each Comparative example/overall yield of Comparative example 5) × 100 (%)

As shown in Table 3 and Fig. 4, in the case of using aluminum hydroxide, magnesium silicate, and calcium dihydrogen phosphate (Example 8), it was confirmed that an increase in yield effect of about 50% can be obtained in the cumulative yield over 10 days as compared with the case of using no additive (Comparative example 5).

INDUSTRIAL APPLICABILITY

Culturing a mushroom with a mushroom culture medium using the additive for a mushroom culture medium of the present disclosure brings about an effect of increasing yield of mushroom fruiting bodies.

## Claims

1.  An additive for a mushroom culture medium, comprising:

    an antacid; and
    a nutrient.

2.  The additive for a mushroom culture medium according to claim 1, wherein the antacid comprises one or more selected from an aluminum compound, a calcium compound, a magnesium compound, and a sodium compound.

3.  The additive for a mushroom culture medium according to claim 1 or 2, wherein the antacid comprises one or more selected from aluminum hydroxide, aluminum silicate, magnesium aluminometasilicate, calcium aluminosilicate, calcium aluminosilicate glass, calcium aluminate hydrate, dawsonite, zeolite, calcium carbonate, calcium hydroxide, calcium oxide, calcium silicate, magnesium carbonate, magnesium hydroxide, magnesium oxide, magnesium silicate, sodium hydrogen carbonate, sodium alginate, hydrocalumite, and hydrotalcite.

4.  The additive for a mushroom culture medium according to any one of claims 1 to 3, wherein the nutrient comprises one or more selected from a phosphoric acid compound, a nitric acid compound, and a sulfuric acid compound.

5.  The additive for a mushroom culture medium according to any one of claims 1 to 4, wherein the nutrient comprises one or more selected from calcium dihydrogen phosphate, calcium monohydrogen phosphate, calcium phosphate, octacalcium phosphate, magnesium phosphate, magnesium monohydrogen phosphate, magnesium dihydrogen phosphate, aluminum phosphate, hydroxyapatite, calcium nitrate, magnesium nitrate, aluminum nitrate, calcium sulfate, magnesium sulfate, and aluminum sulfate.

6.  The additive for a mushroom culture medium according to any one of claims 1 to 5, wherein the nutrient comprises a phosphoric acid compound.

7.  The additive for a mushroom culture medium according to claim 6, wherein a content of phosphorus atoms is 5 to 50 wt% in terms of oxide ($P_2O_5$) based on a total weight of the additive for a mushroom culture medium.

8.  The additive for a mushroom culture medium according to claim 6 or 7, wherein a weight ratio of the phosphoric acid compound to the antacid is 1 : 99 to 90 : 10.

9.  The additive for a mushroom culture medium according to any one of claims 1 to 8, wherein the combinations of the antacid and the nutrient comprise any one combination selected from (i) to (iii) below:

    (i) a combination of aluminum hydroxide and calcium dihydrogen phosphate;
    (ii) a combination of aluminum hydroxide and aluminum silicate, and calcium dihydrogen phosphate; and
    (iii) a combination of aluminum hydroxide and magnesium silicate, and calcium dihydrogen phosphate.

10. The additive for a mushroom culture medium according to any one of claims 1 to 9, used for a mushroom species that undergoes a generation step of generating a mushroom fruiting body and a harvest step of harvesting the mushroom fruiting body generated in the generation step, wherein each of the steps is performed a plurality of times.

11. The additive for a mushroom culture medium according to any one of claims 1 to 9, wherein a mushroom species that undergoes a generation step of generating a mushroom fruiting body and a harvest step of harvesting the mushroom fruiting body generated in the generation step, wherein each of the steps is performed a plurality of times is one or more selected from Lentinula edodesshiitake mushrooms and Agaricus bisporuscommon mushrooms.

12. A mushroom culture medium comprising the additive for a mushroom culture medium according to any one of claims 1 to 9.

13. A method for culturing a mushroom, comprising:

a culturing step of culturing a fungus of a mushroom in a mushroom culture medium comprising the additive for a mushroom culture medium according to any one of claims 1 to 9 and the fungus of a mushroom;
a first generation step of generating a first mushroom fruiting body in the mushroom culture medium;
and a first harvest step of harvesting the first mushroom fruiting body generated in the first generation step.

14. The method for culturing a mushroom according to claim 13, further comprising:

an n-1-th rest step of resting the mushroom culture medium after an $n$-$1^{th}$ harvest step;
an $n^{th}$ generation step of generating an $n^{th}$ mushroom fruiting body in the mushroom culture medium after the $n$-$1^{th}$ rest step;
and an $n^{th}$ harvest step of harvesting an $n^{th}$ mushroom fruiting body generated from the mushroom culture medium in the $n^{th}$ generation step,
wherein n is an integer of 2 or more.

15. The method for culturing a mushroom according to claim 14, the method further comprising an $n$-$1^{th}$ immersion step of immersing the mushroom culture medium in water after the $n$-$1^{th}$ rest step and before the $n^{th}$ generation step.

16. The method for culturing a mushroom according to claim 14 or 15, wherein the $n$-$1^{th}$ rest step, the $n^{th}$ generation step, and the $n^{th}$ harvest step are repeated until n is 3 or more.

17. The method for culturing a mushroom according to claim 15 or 16, wherein the $n$-$1^{th}$ rest step, the $n$-$1^{th}$ immersion step, the $n^{th}$ generation step, and the $n^{th}$ harvest step are repeated until n is 3 or more.

18. The method for culturing a mushroom according to any one of claims 14 to 17, the method comprising the $n$-$1^{th}$ rest step of adding, to the mushroom culture medium, a slurry containing a new additive for a mushroom culture medium, wherein the new additive for a mushroom culture medium contains an antacid and a nutrient.

19. The method for culturing a mushroom according to claim 15 or 17, the method comprising the $n$-$1^{th}$ immersion step of immersing the mushroom culture medium in a slurry containing a new additive for a mushroom culture medium, wherein the new additive for a mushroom culture medium contains an antacid and a nutrient.

[Fig. 1]

Yield (Test example 1)

[Fig. 2]

Individual weight (Test example 1)

[Fig. 3]

Yield (Test example 2)

[Fig. 4]

Cumulative yield

# INTERNATIONAL SEARCH REPORT

| International application No. |
|---|
| **PCT/JP2024/004857** |

## A. CLASSIFICATION OF SUBJECT MATTER

*A01G 18/20*(2018.01)i
FI: A01G18/20

According to International Patent Classification (IPC) or to both national classification and IPC

## B. FIELDS SEARCHED

Minimum documentation searched (classification system followed by classification symbols)

A01G18/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X | JP 2006-149257 A (KYOWA CHEM IND CO., LTD.) 15 June 2006 (2006-06-15) paragraphs [0002]-[0026] | 1-8, 10-13 |
| Y | | 14-19 |
| X | WO 2021/033458 A1 (KYOWA CHEM IND CO., LTD.) 25 February 2021 (2021-02-25) paragraphs [0013]-[0049] | 1-13 |
| Y | | 14-19 |
| Y | JP 8-214690 A (NICHINICHI PHARMACEUTICAL CO., LTD.) 27 August 1996 (1996-08-27) paragraphs [0015]-[0022] | 14-19 |
| A | JP 2019-122352 A (DENKA CO., LTD.) 25 July 2019 (2019-07-25) paragraphs [0046]-[0068] | 1-19 |
| A | JP 2004-313093 A (KYOWA CHEM IND CO., LTD.) 11 November 2004 (2004-11-11) paragraphs [0006], [0007] | 1-19 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 March 2024** | **14 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**

| International application No. |
| --- |
| **PCT/JP2024/004857** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2673796 B2 (HOKUTO SANGYO KK) 05 November 1997 (1997-11-05)<br>paragraphs [0012]-[0018] | 1-19 |

Form PCT/ISA/210 (second sheet) (July 2022)

**INTERNATIONAL SEARCH REPORT**
Information on patent family members

International application No.

**PCT/JP2024/004857**

| Patent document cited in search report | | | Publication date (day/month/year) | Patent family member(s) | Publication date (day/month/year) |
|---|---|---|---|---|---|
| JP | 2006-149257 | A | 15 June 2006 | (Family: none) | |
| WO | 2021/033458 | A1 | 25 February 2021 | US 2022/0279735 A1 paragraphs [0035]-[0101] EP 4019623 A1 CN 114258264 A | |
| JP | 8-214690 | A | 27 August 1996 | (Family: none) | |
| JP | 2019-122352 | A | 25 July 2019 | (Family: none) | |
| JP | 2004-313093 | A | 11 November 2004 | (Family: none) | |
| JP | 2673796 | B2 | 05 November 1997 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000245256 A